# FASCICULE DE BREVET EUROPEEN

(11) **EP 3 873 719 B1**
(45) Date de publication et mention de la délivrance du brevet: **10.08.2022**
(21) Numéro de dépôt: 19816829.6
(22) Date de dépôt: 29.10.2019
(51) Int. Cl.: B29C 49/64, B29C 49/06, B29C 49/68, B29C 49/78, B29L 31/00

(54) **PROCÉDÉ DE GESTION DE PRÉFORMES IMMOBILISÉES DANS UNE STATION DE CHAUFFAGE APRÈS UNE INTERRUPTION DE PRODUCTION**
VERFAHREN ZUR VERWALTUNG VON IN EINER HEIZSTATION IMMOBILISIERTEN VORFORMEN NACH EINER PRODUKTIONSUNTERBRECHUNG
METHOD FOR MANAGING PREFORMS IMMOBILISED IN A HEATING STATION FOLLOWING AN INTERRUPTION IN PRODUCTION

(30) Priorité: 02.11.2018 FR 1860130
(43) Date de publication de la demande: 08.09.2021
(73) Titulaire: Sidel Participations, 76930 Octeville-sur-Mer (FR)
(72) Inventeur: LAHOGUE, Yoann, 76930 Octeville-sur-mer (FR); FEUILLOLEY, Guy, 76930 Octeville-sur-mer (FR)
(74) Mandataire: Sidel Group
(86) Numéro de dépôt international: PCT/FR2019/052568
(87) Numéro de publication internationale: WO 2020/089557

(56) Documents cités:
- FR-A1- 3 035 651
- US-A- 4 197 071
- US-B1- 6 529 796

## Description

### DOMAINE TECHNIQUE DE L'INVENTION

L'invention concerne un procédé de gestion de préformes captives immobilisées dans une station de chauffage pendant une interruption de production.

### ARRIERE PLAN TECHNIQUE DE L'INVENTION

L'invention est destinée à être mise en œuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées.

Les documents US6529796B1 et US4197071A décrivent de telles installations selon l'art antérieur.

Il est connu de réaliser les récipients en matériau thermoplastique, tel que du polyéthylène téréphtalate (PET), par un procédé de formage de préformes.

Selon une technique bien connue, de tels récipients sont produits en deux étapes principales.

Dans une première étape, on procède au moulage par injection d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage.

Dans une deuxième étape de formage, les préformes chaudes sont logées dans les cavités de moules. Puis, un fluide de formage sous pression est injecté dans les préformes pour plaquer la paroi de la préforme contre les parois de la cavité pour conformer la préforme en récipient final. Cette opération de soufflage s'accompagne généralement d'une opération d'étirage consistant à introduire une tige d'élongation dans la préforme par son col afin d'étirer axialement la paroi de la préforme.

Dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Pour permettre son formage, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation. A cet effet, l'installation de fabrication comporte, une station de chauffage qui permet de chauffer le corps des préformes à la température requise pour réaliser l'étape de formage.

Les stations de chauffage classiques sont équipées de lampes à incandescence de type halogène, qui rayonnent suivant la loi de Planck sur un spectre continu.

Avant de lancer toute production, il convient de préchauffer la station de chauffage pour l'amener, à l'aide des lampes, à une température convenable susceptible de conférer aux préformes un profil thermique permettant de mener ensuite à bien le formage.

Ce préchauffage est lent et nécessite des réglages délicats.

En outre, les lampes rayonnent généralement de la chaleur dans toutes les directions. Pour permettre d'augmenter l'efficacité de la station de chauffage, il est connu d'agencer des réflecteurs qui permettent de réfléchir le rayonnement chauffant en direction des préformes.

Le rayonnement émis par les lampes n'étant pas directif, de nombreux éléments de la station de chauffage, dont notamment les réflecteurs, accumulent de la chaleur dès le préchauffage. Il en résulte que lors d'un arrêt intempestif de la production, l'extinction des lampes ne permet pas une baisse immédiate de la température à l'intérieur de la station de chauffage. Les divers éléments chauffés restituent en effet la chaleur accumulée par un phénomène d'inertie thermique. Il s'ensuit que les préformes bloquées dans la station de chauffage continuent à chauffer de manière non maîtrisée, ce qui les rend impropres au formage. Les préformes immobilisées ainsi chauffées doivent donc être jetées au rebut.

### BREF RESUME DE L'INVENTION

L'invention propose un procédé de gestion de préformes captives immobilisées dans une station de chauffage pendant une interruption de production, la station de chauffage comportant :
- un dispositif de convoyage de préformes comportant des supports individuels circulant en circuit fermé, chaque support individuel étant destiné à transporter une préforme en déplacement continu le long d'un trajet de transport prédéterminé depuis un point d'entrée jusqu'à un point de sortie,
- une cavité de chauffe bordée d'au moins une rangée d'émetteurs de rayonnement électromagnétique monochromatique commandés entre un état éteint et un état allumé, la cavité de chauffe étant traversée par le trajet de transport ;
   le procédé comportant une étape préalable de redémarrage du dispositif de convoyage pour transporter les préformes captives en direction du point de sortie ;
   caractérisé en ce que le procédé comporte une étape de chauffage, par les émetteurs de la cavité de chauffe, des préformes captives dites "froides" qui ont été immobilisées avant d'avoir été exposées au rayonnement électromagnétique émis par les émetteurs.

Selon d'autres caractéristiques de l'invention :
- les préformes captives froides sont chauffées directement après le redémarrage du dispositif de convoyage lors de leur passage dans la cavité de chauffe sans avoir été éjectées du support individuel les portant pendant leur immobilisation ;
- les émetteurs de la cavité de chauffe sont éteints pendant l'interruption de production, et ils sont commandés dans leur état allumé durant l'étape de chauffage des préformes captives froides ;
- durant l'étape de chauffage, les préformes captives froides sont chauffées selon un profil thermique permettant leur formage ultérieur par une station de formage de l'installation de fabrication ;
- les préformes sont chauffées selon un profil thermique déterminé qui était déjà appliqué aux préformes juste avant l'interruption de production ;
- la station de chauffage fait partie d'une installation de fabrication de récipients en matériau thermoplastique par formage des préformes chauffées par la station de chauffage, les préformes se déplaçant le long d'un flux de production, le procédé comportant une étape de purge durant laquelle les préformes captives dites "chaudes", qui ont été immobilisées après avoir été exposées au rayonnement électromagnétique émis par les émetteurs sont éjectées du flux de production en direction d'un flux de rebut ;
- lors de l'étape de purge, les préformes captives chaudes sont éjectées du trajet de transport en amont du point de sortie ;
- les préformes captives chaudes sont éjectées du flux de production en aval du point de sortie de la station de chauffage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une station de chauffage réalisée selon les enseignements de l'invention ;
- la figure 2 est une vue de côté qui représente schématiquement une portion d'un dispositif de convoyage de préformes appartenant à la station de chauffage de la figure 1 ;
- la figure 3 est une vue similaire à celle de la figure 2 qui représente le dispositif de convoyage passant au niveau d'un dispositif de rebut de la station de chauffage ;
- la figure 4 est un schéma-bloc qui représente un procédé de gestion de préformes en cas d'interruption de fonctionnement de la station de chauffage de la figure 1 réalisé selon les enseignements de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée selon le sens de déplacement des préformes le long de leur trajet de transport, verticale, dirigée selon le sens de la gravité, et transversale indiquées par le trièdre L,V,T des figures.

Dans la suite de la description, les termes "amont" et "aval" seront employés en référence au sens de déplacement des préformes le long de leur flux de production et notamment le long de leur trajet de transport.

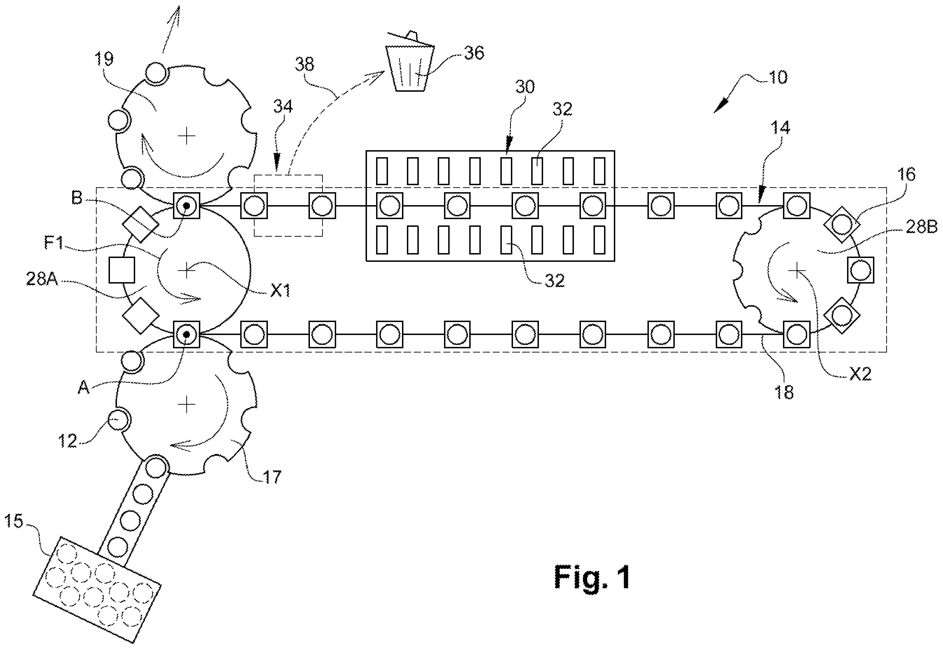

On a représenté à la figure 1 une station 10 de chauffage de préformes 12 en matériau thermoplastique. La station 10 de chauffage appartient à une installation (non représentée) de fabrication de récipient en matériau thermoplastique par formage, notamment étirage-soufflage, desdites préformes 12.

La station 10 de chauffage comporte un dispositif 14 de convoyage des préformes 12 en file. Le dispositif 14 de convoyage comporte des supports 16 individuels circulant en circuit fermé dans la station 10 de chauffage. Chaque support 16 individuel est destiné à transporter une préforme 12 en déplacement continu le long d'un trajet 18 de transport prédéterminé depuis un point "A" d'entrée de la station 10 de chauffage qui est alimenté par une file de préformes 12 jusqu'à un point "B" de sortie en direction d'une station (non représentée) de formage, notamment de moulage par soufflage ou par étirage-soufflage.

Les préformes 12 se déplacent ainsi en file à travers l'installation de production en suivant un flux de production depuis le point "A" d'entrée de la station 10 de chauffage jusqu'à une sortie de l'installation sous forme de récipients finis conformes, après formage dans la station de formage. Le trajet 18 de transport forme un tronçon de ce flux de production des préformes 12.

Les préformes 12 alimentant la station 10 de chauffage proviennent d'un dispositif 15 de mise en ligne et de redressement des préformes 12 dans lequel les préformes 12 sont déversées en vrac et dans lequel les préformes 12 sont alignées et redressées. Il existe de nombreux dispositifs d'alignement et de redressement, tels que des dispositifs à centrifugeuse et des dispositifs à rail gravitaire. Ces dispositifs sont bien connus et ne seront pas détaillés par la suite.

Le dispositif 14 de convoyage est ici alimenté en préformes 12 froides par une roue 17 de transfert agencée tangentiellement au point "A" d'entrée, tandis que les préformes 12 chaudes sont prises en charge individuellement par une roue 19 de transfert agencée tangentiellement au point "B" de sortie. Depuis le point "B" de sortie jusqu'au point "A" d'entrée, les supports 16 individuels du dispositif 14 de convoyage circulent à vide.

Généralement, chaque support 16 individuel comporte des moyens susceptibles d'entraîner la préforme 12 en rotation autour de son axe principal durant son déplacement le long d'au moins une partie du trajet 18 de transport pour permettre un chauffage homogène du corps de la préforme 12. Un tel support 16 individuel est parfois appelé "tournette".

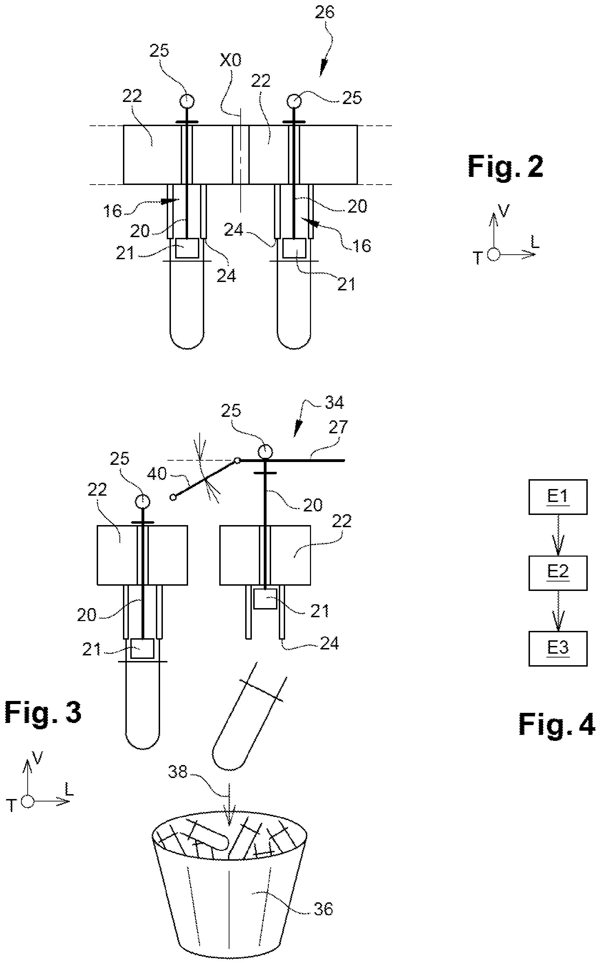

Dans le mode de réalisation représenté aux figures 2 et 3, le dispositif 14 de convoyage comporte ici une pluralité d'éléments 22 de transport formant les maillons d'une chaîne 26 de transport fermée dont une portion est visible à la figure 2. La chaîne 26 de transport est souple. A cet effet, les éléments 22 de transport sont montés articulés les uns aux autres autour d'axes verticaux "X0". La chaîne 26 de transport est montée déplaçable par rapport à un bâti fixe par rapport au sol de la station 10 de chauffage.

En se reportant à nouveau à la figure 2, chaque élément 22 de transport porte au moins un support 16 individuel. Chaque support 16 individuel comporte un mandrin 21.

De manière connue, le mandrin 21 est pourvu de moyens élastiques (non représentés), tel qu'un joint torique, avantageusement réalisé dans un matériau élastique (tel qu'un élastomère), et dont le diamètre externe est égal ou légèrement supérieur au diamètre interne du col d'une préforme 12, de façon à assurer la sustentation de la préforme 12 par frottement contre la paroi interne du col, lorsque le mandrin 21 est inséré dans le col de la préforme 12.

Dans l'exemple représenté aux figures, chaque support 16 individuel est susceptible d'être commandé entre une position active dans laquelle la préforme 12 se déplace de manière solidaire avec le support 16 individuel, et une position inactive dans laquelle la préforme 12 est totalement libre par rapport au support 16 individuel.

Le mandrin 21 est ici monté coulissant en translation verticale suivant un axe vertical, par rapport à l'élément 22 de transport. Le mandrin 21 est fixé à l'extrémité inférieure d'une tige 20 cylindrique.

Le mandrin 21 est monté en coulissement vertical par rapport à l'élément 22 de transport, entre une position inactive dans laquelle le mandrin 21 est rétractée par rapport à une face 24 de butée (à droite à la figure 3), et une position active (figure 2 et à gauche à la figure 3) dans laquelle le mandrin 21 fait saillie vers le bas par rapport à la face 24 de butée pour s'emmancher dans le col d'une préforme 12. A titre d'exemple non limitatif, la face 24 de butée est ici montée fixe par rapport à l'élément 22 de transport.

Selon un exemple non limitatif, le mandrin 21 est ici rappelé élastiquement vers sa position active, tandis qu'il est commandé vers sa position inactive par coopération entre un galet 25 suiveur de came, agencé ici à une extrémité supérieure de la tige 20, avec une came 27, illustrée à la figure 3, qui agit à l'encontre de l'effort de rappel élastique.

Plus particulièrement, en position active, le mandrin 21 est destiné à être emmanché dans le col d'une préforme 12, tandis qu'en position inactive, le mandrin 21 est destiné à être extrait du col de ladite préforme 12, la préforme 12 prenant appui contre la face 24 de butée pour permettre son extraction.

En variante non représentée de l'invention, le mandrin est destiné à saisir le col du corps creux par l'extérieur. Cette variante est bien connue de l'homme du métier et ne sera donc pas décrite plus en détails par la suite.

Selon une variante non représentée de l'invention, les préformes sont chargées ou déchargées de leur support par des pinces de prise en charge qui se déplacent conjointement avec les supports sur au moins une partie de leur trajet, les pinces étant mobiles axialement par rapport au support pour permettre l'emboîtement ou le déboîtement des préformes de leur support. Dans ce cas, les mandrins ne sont pas coulissants par rapport à l'élément de transport. Les pinces sont par exemple portées par une roue de guidage de la chaîne de transport.

En se reportant à nouveau à la figure 1, le dispositif 14 de convoyage comprend, par ailleurs, une première roue 28A de guidage de la chaîne 26 de transport et une deuxième roue 28B de guidage de la chaîne 26 de transport montées chacune rotative sur le bâti de la station 10 de chauffage autour d'un axe vertical "X1, X2" respectif. La chaîne 26 de transport est engrenée autour des deux roues 28A, 28B de guidage. L'une des deux roues de guidage, dite menante, est entraînée en rotation par un moteur pour mettre en mouvement la chaîne de transport afin de déplacer les éléments 22 de transport le long du circuit fermé. Les roues 28A, 28B de guidage tournent ici dans un sens antihoraire, comme cela est indiqué par une flèche "F1" de la figure 1.

En variante non représentée de l'invention, la chaîne de transport permet de compacter les préformes en se pliant en accordéon lorsqu'elle passe dans la cavité de chauffe comme cela est décrit en détails dans le document EP-B1-2.623.439.

Selon une variante non représentée de l'invention, le dispositif de convoyage est formé d'éléments de transport qui ne sont pas reliés entre eux et qui forment des navettes circulant sur des rails disposés en circuit fermé. Les chariots et les rails forment par exemple un moteur linéaire, le rail formant un "stator" mis à plat et le chariot formant un rotor dudit moteur linéaire. Un tel dispositif de convoyage pour une station de chauffage est par exemple décrit dans le document FR-A1-3.035.651.

En outre, chaque support 16 individuel est susceptible d'entraîner en rotation la préforme 12 autour de son axe pendant son déplacement le long du trajet 18 de transport pour permettre le chauffage homogène de ladite préforme 12.

Selon un premier exemple non représenté, le support 16 individuel est entraîné en rotation par un pignon solidaire du mandrin 21 qui coopère avec une crémaillère fixe de la station 10 de chauffage.

Selon un autre exemple non représenté, le support 16 individuel est entraîné en rotation au moyen d'un moteur électrique embarqué sur l'élément 22 de transport.

En se reportant à nouveau à la figure 1, la station 10 de chauffage comporte aussi une cavité 30 de chauffe traversée par le trajet 18 de transport pour permettre le chauffage des préformes 12 durant leur déplacement. La cavité 30 de chauffe est agencée sur une portion du trajet 18 de transport, à proximité du point "B" de sortie des préformes.

La cavité 30 de chauffe est destinée à chauffer les corps des préformes 12 au-delà de leur température de transition vitreuse pour permettre leur formage par la station de formage pendant qu'elles sont chaudes.

La cavité 30 de chauffe est bordée d'une série d'émetteurs 32 adjacents, par exemple deux rangées d'émetteurs 32 en regard l'une de l'autre.

Chaque émetteur 32 est équipé de sources de rayonnement électromagnétique monochromatique (notamment des lasers), dont le spectre d'émission s'étend pour l'essentiel dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle ayant un spectre d'émission en fréquence qui s'étend sur une bande de largeur spectrale faible mais non nulle, centrée sur une fréquence principale où l'intensité du rayonnement est maximale. Pour les besoins de la présente demande, on considère comme monochromatique une telle source réelle. De même, pour les besoins de la présente description, on considère comme monochromatique une source multimode, c'est-à-dire émettant sur un spectre discret comprenant plusieurs bandes étroites centrées sur des fréquences principales distinctes.

L'avantage d'un rayonnement monochromatique est que, bien choisi, il peut être concentré sur une (ou plusieurs) fréquence(s) pour laquelle (ou pour lesquelles) le comportement thermique du matériau des préformes 12 est, en termes d'absorption, particulièrement intéressant.

A titre d'exemple, pour obtenir une chauffe rapide en surface des préformes 12, on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes 12, on peut choisir une (ou plusieurs) fréquence(s) pour laquelle (pour lesquelles) le matériau est relativement moins absorbant.

En pratique, les sources dont sont pourvus les émetteurs 32 sont des lasers (par exemple des diodes laser) émettant dans l'infrarouge et organisés par juxtaposition et superposition pour former une ou plusieurs matrices.

En l'espèce, chaque matrice peut être une matrice de diodes laser à cavité verticale émettant par la surface (VCSEL), chaque diode émettant par exemple un faisceau laser d'une puissance unitaire de l'ordre du milliwatt à une longueur d'onde d'environ 1 µm.

Ces sources sont radiantes, c'est-à-dire que le rayonnement émis est transmis aux préformes 12 sans que l'air serve de vecteur de transmission.

Les sources convertissent la puissance électrique qui leur est fournie en un champ électromagnétique rayonné dans la cavité.

Les émetteurs 32 sont commandés entre un état éteint, dans lequel ils n'émettent aucun rayonnement, et un état allumé dans lequel ils sont alimentés par une puissance électrique. Cette puissance électrique peut être variable. Selon un mode de réalisation non représenté, la station de chauffage comprend avantageusement, pour l'alimentation électrique des émetteurs 32, un variateur de puissance. Ce variateur peut être analogique ou électronique.

En fonctionnement normal de la station 10 de chauffage, les émetteurs 32 sont commandés de manière à chauffer le corps des préformes 12 selon un profil thermique déterminé qui est adapté à la forme du récipient final à former.

Une station 10 de chauffage fonctionnant à l'aide de cette technologie présente de nombreux avantages par rapport à un four classique à lampes halogènes. Entre autres, dans ce type de station 10 de chauffage :
- les émetteurs 32 rayonnent dans l'infrarouge sans diffusion de chaleur, ce qui, à la différence d'un four halogène, rend inutile toute ventilation ;
- les préformes 12 peuvent être chauffées selon des profils thermiques plus précis ;
- aucune préchauffe n'est nécessaire.

Les inventeurs ont remarqué que, outre ces avantages connus, l'inertie thermique de la station 10 de chauffage est devenue négligeable, notamment du fait de l'absence de diffusion de chaleur. En d'autres termes, les préformes 12 s'échauffent au-delà de leur température de transition vitreuse uniquement lorsqu'elles sont exposées directement au rayonnement émis par les émetteurs 32 dans la cavité 30 de chauffe.

En cas d'interruption fortuite de la circulation des préformes 12 dans la station 10 de chauffage, les préformes 12 embarquées par le dispositif 14 de convoyage se retrouvent captives à l'intérieur de la station 10 de chauffage. Elles sont ainsi immobilisées sur le trajet 18 de transport. De telles préformes 12 seront par la suite appelées "préformes 12 captives".

Les préformes 12 captives qui sont immobilisées en amont de la cavité 30 de chauffe n'ont pas encore été exposées au rayonnement des émetteurs 32. Elles sont donc baignées dans une atmosphère froide par rapport à leur température de transition vitreuse. Ces préformes 12 seront par la suite appelées "préformes 12 captives froides".

Les préformes 12 captives qui sont immobilisées dans la cavité 30 de chauffe ou en aval de la cavité de chauffe ont été au moins partiellement exposées au rayonnement des émetteurs 32. Ces préformes 12 seront par la suite appelées "préformes 12 captives chaudes" car leur corps a été chauffé à une température approchant ou dépassant leur température de transition vitreuse.

Pour éviter que les préformes 12 captives immobilisées dans la cavité 30 de chauffe ne fondent, les émetteurs 32 sont éteints dès qu'une interruption de circulation des préformes 12 est détectée.

Lorsque les préformes 12 captives chaudes sont immobilisées trop longtemps, la température de leur corps diminue lentement, ce qui provoque une cristallisation du matériau thermoplastique. Une telle préforme 12 ne peut plus redevenir malléable par chauffage, et elle ne peut donc plus être utilisée pour former un récipient final. Ces préformes 12 sont traditionnellement envoyées au rebut.

Selon un exemple de réalisation de l'invention, la station 10 de chauffage est ici équipée d'un dispositif 34 de rebut qui comporte des moyens d'éjection de préformes 12 agencés le long du trajet 18 de transport en aval de la cavité 30 de chauffe et en amont du point "B" de sortie. Les moyens d'éjection permettent de libérer sélectivement une préforme 12 de son support 16 individuel en amont du point "B" de sortie. La préforme 12 ainsi éjectée est dirigée vers un flux 38 de rebut, par exemple vers une benne 36.

Selon l'exemple non limitatif illustré à la figure 3, les moyens d'éjection comportent ici un aiguillage 40 qui est commandé entre une position escamotée, indiquée en traits interrompus, dans laquelle le galet 25 du support 26 individuel passe au-dessous de la came 27, le mandrin 21 demeurant ainsi en position active, et une position de bifurcation, indiquée en trait plein, dans laquelle l'aiguillage 40 est interposé sur le trajet du galet 25 pour guider ce dernier en direction de la came 27 pour commander le mandrin 21 en position inactive et ainsi éjecter la préforme 12.

Lorsqu'une préforme 12 est éjectée par les moyens d'éjection du dispositif 34 de rebut, elle tombe vers la benne 36 de rebut, éventuellement par l'intermédiaire de toboggan ou de tapis de convoyage.

En variante non représentée de l'invention, les préformes captives chaudes sont éjectées du flux de production des préformes en aval du point "B" de sortie de la station de chauffage, par exemple au niveau de la station de formage, en même temps que des récipients non conformes après formage, ou encore au niveau d'une roue de transfert interposée entre la station 10 de chauffage et la station de formage.

L'invention propose un procédé qui permet de tirer avantage du fait que le matériau constituant les préformes 12 captives froides présente encore les propriétés structurelles lui permettant de subir une opération de formage après chauffage pour la réalisation de récipients finaux. L'invention propose plus particulièrement de jeter au rebut les préformes 12 captives chaudes et de chauffer les préformes 12 captives froides afin de les envoyer vers une station de formage pour les transformer en récipients finaux.

Ainsi, contrairement à ce qui est actuellement pratiqué, toutes les préformes 12 captives ne sont pas jetées au rebut. Ceci permet de réaliser une économie non négligeable pour le fabricant de récipient.

Selon les enseignements de l'invention, les préformes 12 captives froides sont chauffées directement après le redémarrage du dispositif 14 de convoyage sans avoir été éjectées du support 16 individuel qui les portait durant leur immobilisation. Ainsi, chaque préforme 12 captive froide est chauffée sans avoir été éjectée du support 16 individuel par lequel elle était déjà portée lors de l'interruption du dispositif 14 de convoyage.

Chaque émetteur 32 de la cavité 30 de chauffe peut en effet être commandé individuellement pour chauffer une préforme 12 entrante sans chauffer sensiblement les préformes 12 captives chaudes encore éventuellement présentes dans la cavité 30 de chauffe.

En se reportant à la figure 4, le procédé de gestion comporte une première étape "E1" de redémarrage du dispositif 14 de convoyage et une deuxième étape "E2" de purge.

A l'issue de l'interruption, la première étape "E1" de redémarrage du dispositif 14 de convoyage est déclenchée. Les préformes 12 captives sont donc à nouveau déplacées en direction du point "B" de sortie.

Lors d'une étape, dite étape "E2" de purge, le dispositif 34 de rebut est commandé pour éjecter, en direction du flux 38 de rebut, toutes les préformes 12 captives chaudes, qui ont été immobilisées après avoir été exposées au rayonnement électromagnétique émis par les émetteurs 32. Ces préformes 12 sont effet susceptibles d'être impropres au formage de récipients finaux. Cette étape "E2" de purge démarre aussitôt que la première préformes 12 captive chaude passe au niveau des moyens d'éjection du dispositif 34 de rebut et elle s'arrête dès que la dernière préforme 12 captive chaude a été éjectée par les moyens d'éjection du dispositif 34 de rebut.

Le nombre de préformes 12 à jeter au rebut est par exemple déterminé en fonction de la vitesse de défilement des préformes. La vitesse de défilement des préformes permet en effet d'estimer le temps nécessaire pour évacuer toutes les préformes 12 captives chaudes en prenant en compte la distance entre le début de la cavité 30 de chauffe et le dispositif 34 de rebut.

En variante non représentée de l'invention, un détecteur est agencé dans l'installation pour détecter le passage des préformes 12 captives chaudes au niveau du dispositif 34 de rebut. Il s'agit par exemple d'un détecteur de température.

Par ailleurs, les préformes 12 captives froides ne sont pas éjectées de leur support 16 individuel avant d'être chauffée lors de l'étape "E3" de chauffage. Ainsi, les émetteurs 32 de la cavité 30 de chauffe sont commandés de manière à chauffer les préformes 12 captives froides lors de leur premier et unique passage à travers la cavité 30 de chauffe.

Lors de cette étape "E3" de chauffage, les préformes 12 captives froides sont chauffées selon un profil thermique qui permet leur formage ultérieur par la station de formage, il s'agit par exemple du profil thermique déterminé qui était appliqué aux préformes 12 avant l'interruption de production. Les préformes 12 captives froides ainsi chauffées sortent ensuite normalement par le point "B" de sortie en direction de la station de formage pour subir l'opération de formage.

L'invention permet avantageusement de réaliser des économies de matière non négligeables en utilisant les préformes 12 captives froides lors d'un arrêt intempestif de la station 10 de chauffage pour former des récipients. Ce procédé peut être mis en œuvre de manière simple et peu onéreuse.

En outre, le procédé réalisé selon les enseignements de l'invention permet de redémarrer très rapidement la production de récipients sans avoir à vider entièrement la station 10 de chauffage avant de redémarrer.

Le procédé réalisé selon l'un quelconque des modes de réalisation est aussi applicable lorsque le dispositif de rebut est agencé en aval du point "B" de sortie de la station 10 de chauffage mais en amont de la station de formage.

## Revendications

1. Procédé de gestion de préformes (12) captives immobilisées dans une station (10) de chauffage pendant une interruption de production, la station (10) de chauffage comportant :
- un dispositif (14) de convoyage de préformes (12) comportant des supports (16) individuels circulant en circuit fermé, chaque support (16) individuel étant destiné à transporter une préforme (12) en déplacement continu le long d'un trajet (18) de transport prédéterminé depuis un point (A) d'entrée jusqu'à un point (B) de sortie,
- une cavité (30) de chauffe bordée d'au moins une rangée d'émetteurs (32) de rayonnement électromagnétique monochromatique commandés entre un état éteint et un état allumé, la cavité (30) de chauffe étant traversée par le trajet (18) de transport ;
le procédé comportant une étape (E1) préalable de redémarrage du dispositif (14) de convoyage pour transporter les préformes (12) captives en direction du point (B) de sortie ;
**caractérisé en ce que** le procédé comporte une étape (E3) de chauffage, par les émetteurs (32) de la cavité (30) de chauffe, des préformes captives dites "froides" qui ont été immobilisées avant d'avoir été exposées au rayonnement électromagnétique émis par les émetteurs (32).

2. Procédé selon la revendication 1, **caractérisé en ce que** les préformes (12) captives froides sont chauffées directement après le redémarrage du dispositif (14) de convoyage lors de leur passage dans la cavité (30) de chauffe sans avoir été éjectées du support (16) individuel les portant pendant leur immobilisation.

3. Procédé selon l'une quelconque des revendications précédentes, **caractérisé en ce que** les émetteurs (32) de la cavité (30) de chauffe sont éteints pendant l'interruption de production, et ils sont commandés dans leur état allumé durant l'étape (E3) de chauffage des préformes captives froides.

4. Procédé selon l'une quelconque des revendications précédentes, **caractérisé en ce que**, durant l'étape (E3) de chauffage, les préformes (12) captives froides sont chauffées selon un profil thermique permettant leur formage ultérieur par une station de formage de l'installation de fabrication.

5. Procédé selon la revendication précédente, **caractérisé en ce que** les préformes (12) sont chauffées selon un profil thermique déterminé qui était déjà appliqué aux préformes (12) juste avant l'interruption de production.

6. Procédé selon l'une quelconque des revendications précédentes, **caractérisé en ce que** la station (10) de chauffage fait partie d'une installation de fabrication de récipients en matériau thermoplastique par formage des préformes chauffées par la station (10) de chauffage, les préformes (12) se déplaçant le long d'un flux de production, le procédé comportant une étape (E2) de purge durant laquelle les préformes (12) captives dites "chaudes", qui ont été immobilisées après avoir été exposées au rayonnement électromagnétique émis par les émetteurs (32) sont éjectées du flux de production en direction d'un flux (38) de rebut.

7. Procédé selon la revendication précédente, **caractérisé en ce que**, lors de l'étape (E2) de purge, les préformes (12) captives chaudes sont éjectées du trajet de transport en amont du point (B) de sortie.

8. Procédé selon la revendication 6, **caractérisé en ce que** les préformes (12) captives chaudes sont éjectées du flux de production en aval du point (B) de sortie de la station (10) de chauffage.

## Patentansprüche

1. Verfahren zur Verwaltung eingeschlossener Vorformlinge (12), die während einer Produktionsunterbrechung in einer Heizstation (10) blockiert sind, wobei die Heizstation (10) aufweist:
- eine Vorrichtung (14) zur Beförderung von Vorformlingen (12), die in geschlossenem Kreislauf umlaufende Einzelträger (16) aufweist, wobei jeder Einzelträger (16) dazu bestimmt ist, einen Vorformling (12) in kontinuierlicher Verschiebung entlang einer vorbestimmten Transportstrecke (18) von einem Eintrittspunkt (A) bis zu einem Austrittspunkt (B) zu transportieren,
- einen Heizhohlraum (30) umrandet von mindestens einer Reihe von Emittern (32) monochromatischer elektromagnetischer Strahlung, die zwischen einem ausgeschalteten Zustand und einem eingeschalteten Zustand gesteuert werden, wobei der Heizhohlraum (30) von der Transportstrecke (18) durchquert wird;
wobei das Verfahren einen vorhergehenden Schritt (E1) des Neustarts der Beförderungsvorrichtung (14) aufweist, um die eingeschlossenen Vorformlinge (12) in Richtung des Austrittspunkts (B) zu transportieren;
**dadurch gekennzeichnet, dass** das Verfahren einen Heizschritt (E3), durch die Emitter (32) des Heizhohlraums (30), der so genannten "kalten" eingeschlossenen Vorformlinge aufweist, die blockiert wurden, ehe sie der von den Emittern (32) emittierten elektromagnetischen Strahlung ausgesetzt wurden.

2. Verfahren nach Anspruch 1, **dadurch gekennzeichnet, dass** die kalten eingeschlossenen Vorformlinge (12) direkt nach dem Neustart der Beförderungsvorrichtung (14) bei ihrem Übergang in den Heizhohlraum (30) erhitzt werden, ohne vom Einzelträger (16) ausgestoßen worden zu sein, der sie während ihrer Blockierung trägt.

3. Verfahren nach einem der vorhergehenden Ansprüche, **dadurch gekennzeichnet, dass** die Emitter (32) des Heizhohlraums (30) während der Produktionsunterbrechung abgeschaltet sind und während des Heizschritts (E3) der kalten eingeschlossenen Vorformlinge in ihren eingeschalteten Zustand gesteuert werden.

4. Verfahren nach einem der vorhergehenden Ansprüche, **dadurch gekennzeichnet, dass** die kalten eingeschlossenen Vorformlinge (12) während des Heizschritts (E3) gemäß einem Wärmeprofil erhitzt werden, das ihr späteres Formen durch eine Formgebungsstation der Fertigungsanlage ermöglicht.

5. Verfahren nach dem vorhergehenden Anspruch, **dadurch gekennzeichnet, dass** die Vorformlinge (12) gemäß einem bestimmten Wärmeprofil erhitzt werden, das bereits kurz vor der Produktionsunterbrechung an die Vorformlinge (12) angewendet wurde.

6. Verfahren nach einem der vorhergehenden Ansprüche, **dadurch gekennzeichnet, dass** die Heizstation (10) Teil einer Fertigungsanlage von Behältern aus thermoplastischem Material durch Formen der durch die Heizstation (10) erhitzten Vorformlinge ist, wobei die Vorformlinge (12) sich entlang eines Produktionsflusses verschieben, wobei das Verfahren einen Entleerungsschritt (E2) aufweist, während dessen die so genannten "warmen" eingeschlossenen Vorformlinge (12), die blockiert wurden, nachdem sie der von den Emittern (32) emittierten elektromagnetischen Strahlung ausgesetzt wurden, aus dem Produktionsfluss in Richtung eines Ausschussflusses (38) ausgestoßen werden.

7. Verfahren nach dem vorhergehenden Anspruch, **dadurch gekennzeichnet, dass** im Entleerungsschritt (E2) die warmen eingeschlossenen Vorformlinge (12) stromaufwärts vor dem Austrittspunkt (B) aus der Transportstrecke ausgestoßen werden.

8. Verfahren nach Anspruch 6, **dadurch gekennzeichnet, dass** die warmen eingeschlossenen Vorformlinge (12) stromabwärts hinter dem Austrittspunkt (B) der Heizstation (10) aus dem Produktionsfluss ausgestoßen werden.

## Claims

1. Method for controlling confined preforms (12) which are stopped in a heating station (10) during a production interruption, the heating station (10) comprising:
- a device (14) for conveying preforms (12) comprising individual supports (16) which move in a closed circuit, each individual support (16) being intended to transport a preform (12) with continuous movement along a predetermined transport path (18) from an input location (A) to an output location (B),
- a heating cavity (30) which is bordered by at least one row of transmitters (32) of monochromatic electromagnetic radiation controlled between a switched-off state and a switched-on state, the transport path (18) extending through the heating cavity (30);
the method comprising a prior step (E1) of restarting the conveying device (14) for transporting the confined preforms (12) in the direction of the output location (B) ;
**characterized in that** the method comprises a step (E3) of heating, by the transmitters (32) of the heating cavity (30), the confined preforms referred to as "cold" preforms which have been stopped before being exposed to the electromagnetic radiation emitted by the transmitters (32) .

2. Method according to Claim 1, **characterized in that** the cold confined preforms (12) are heated directly after restarting the conveying device (14) when they pass into the heating cavity (30) without being ejected from the individual support (16) carrying them during their stoppage.

3. Method according to one of the preceding claims, **characterized in that** the transmitters (32) of the heating cavity (30) are switched off during the production interruption and they are controlled in their switched-on state during the step (E3) of heating the cold confined preforms.

4. Method according to one of the preceding claims, **characterized in that**, during the heating step (E3), the cold confined preforms (12) are heated in accordance with a thermal profile which enables them to be subsequently moulded by a moulding station of the production installation.

5. Method according to the preceding claim, **characterized in that** the preforms (12) are heated in accordance with a predetermined thermal profile which was already applied to the preforms (12) just before the production interruption.

6. Method according to one of the preceding claims, **characterized in that** the heating station (10) is part of an installation for producing receptacles of thermoplastic material by moulding preforms heated by the heating station (10), the preforms (12) moving along a production flow, the method comprising a purge step (E2) during which the confined preforms (12) which are referred to as "hot" preforms and which have been stopped after being exposed to the electromagnetic radiation transmitted by the transmitters (32) are ejected from the production flow in the direction of a waste flow (38).

7. Method according to the preceding claim, **characterized in that**, during the purge step (E2), the hot confined preforms (12) are ejected from the transport path upstream of the output location (B).

8. Method according to Claim 6, **characterized in that** the hot confined preforms (12) are ejected from the production flow downstream of the output location (B) of the heating station (10).
